Europäisches Patentamt

European Patent Office

Office européen des brevets

(11) Publication number: **0 537 917 A1**

# EUROPEAN PATENT APPLICATION

(21) Application number: **92308853.8**

(22) Date of filing: **29.09.92**

(51) Int. Cl.5: **G02F 1/136**

(30) Priority: **15.10.91 US 776734**

(43) Date of publication of application:
**21.04.93 Bulletin 93/16**

(84) Designated Contracting States:
**DE FR GB IT NL**

(71) Applicant: **GENERAL ELECTRIC COMPANY**
**1 River Road**
**Schenectady, NY 12345(US)**

(72) Inventor: **Castleberry, Donald Earl**
**2314 Algonquin Road**
**Schenectady, New York 12309(US)**

(74) Representative: **Lupton, Frederick et al**
**LONDON PATENT OPERATION, G.E.**
**TECHNICAL SERVICES Co. INC., Essex**
**House, 12/13 Essex Street**
**London WC2R 3AA (GB)**

(54) Active matrix LCD with buried ground plane.

(57) A liquid crystal display device includes a ground plane (18) insulated from pixel electrodes (14) and data lines (15). The ground plane substantially reduces capacitive coupling between the pixel electrodes and the data lines, and also provides storage capacitance $(C_s)$ to thereby substantially reduce crosstalk and unwanted artifacts.

*FIG. 2*

EP 0 537 917 A1

This invention relates generally to liquid crystal displays (LCD's) and particularly to the addition of a buried ground plane for decreasing crosstalk and improving image quality in such displays.

Active matrix LCD's, of the type described in US Patent 4,766,430, issued to G. G. Gillette on 23 August 1988, are composed of a matrix of liquid crystal pixels arranged in rows and columns. Each pixel is composed of a pixel electrode and a common electrode which is parallel to all of the pixel electrodes. The pixel electrodes ad the common electrode are separated by a dielectric liquid crystal material, and thus the pixels are the electrical equivalents of capacitors. Each pixel is addressed by a solid state switching device, typically a thin film transistor (TFT). Scan lines are used to turn the solid state switching devices on and off. Data lines are used to apply data to be displayed to the individual pixels. The gates of all the TFT's in a particular row are connected to the same scan line. The drains of all the TFT's in a particular column are connected to the same data line. The sources of the TFT's are connected to individual pixel electrodes.

In operation, a scan line is voltage-biased so that all TFT's within that particular row are turned on. The data to be displayed are applied to the data lines so that the individual pixels are charged to voltage levels dictated by the video information available on the data lines. The scan line is turned off, and the individual pixels store voltage levels in accordance with the levels received from the individual data lines. The scan lines are sequentially addressed and continuously refreshed to maintain the displayed image.

In high resolution displays, the capacitance of the pixel is very small, and therefore the parasitic lateral capacitance between the data lines and the pixel electrodes is significant. Voltage changes on the data lines perturb the voltage stored on a pixel electrode when other pixels in the columns are addressed. This produces image defects, such as vertical smear or crosstalk.

The crosstalk problem is particularly bothersome for achieving large screen high definition television (HDTV), such as projection systems using amorphous silicon TFT's. HDTV requires very small pitch LCD's, typically less than 100 micrometers, and a good aperture ratio. With such a fine pitch, the coupling between the scan lines, data lines and pixel electrodes is sufficient to produce undesired artifacts on the screen. The coupling can be reduced to eliminate the undesirable artifacts by adding a storage capacitor $C_s$ to the device.

One prior art technique of adding a storage capacitor $C_s$ overlaps, but insulatively separates, the pixel electrodes and the following scan lines. This technique is advantageous because it utilizes scan lines which are already available on the substrate surface and thus has a minimum impact on the aperture ratio. However, the technique is disadvantageous in that a low storage capacitor $C_s$ results, because there is very little space available beside the TFT. Additionally, increasing the storage capacitor in this manner increases the scan line delay time.

Another prior art technique for adding a storage capacitor $C_s$ is the addition of a bus line parallel to the scan line. This technique is advantageous because it provides a sufficiently large storage capacitor $C_s$ with no process changes. However, it is detrimental because it decreases the aperture ratio. An indium tin oxide line (ITO) can be used to preserve the aperture ratio. However, the resistivity of the ITO line increases the delay time. Additionally, there is horizontal crosstalk due to the delay time of the additional $C_s$ line and an increase of the data line delay results.

Another prior art technique for adding a storage capacitor $C_s$ is the addition of a bus parallel to the data line. This technique also provides a sufficient storage capacitor $C_s$ without any process changes. However, it also decreases the aperture ratio, unless a ITO is used. Also, the crossovers of the storage capacitance lines $C_s$ and the scan lines increase the scan line delay time, and the combination of the data line delays and storage capacitance line $C_s$ delay can be a significant problem.

The present invention provides a storage capacitor $C_s$ sufficiently large to reduce crosstalk and thereby eliminate undesirable artifacts, while simultaneously eliminating the problems with the prior art techniques.

In accordance with the invention, a liquid crystal display has a pair of insulative substrates separated by a liquid crystal material. A matrix of pixel electrodes, arranged in rows and columns, and conductive scan and data lines are supported by a first of the substrates. The pixel electrodes and the conductive lines are spaced from one another. A common electrode, which is common to all the pixels, is supported by a second of the substrates. Solid state switching devices are controlled by the scan lines and selectively connect the pixel electrodes to the data lines. A conductive plane, which serves as a ground plane, is arranged on the substrate surface which is in close proximity to the liquid crystal material. An insulative layer is arranged between the pixel electrodes, the conductive lines and the conductive plane.

In the drawings:

FIGURE 1 shows a portion of a matrix of pixel electrodes of a prior art liquid crystal display (LCD).

FIGURE 2 is a cross section of one pixel of an LCD embodying the invention.

FIGURES 3a and 3b, respectively, are equivalent circuits of liquid crystal cells without and with a buried ground plane.

FIGURES 4a and 4b show how the presence of a ground plane decreases the data line-pixel electrode stray capacitance.

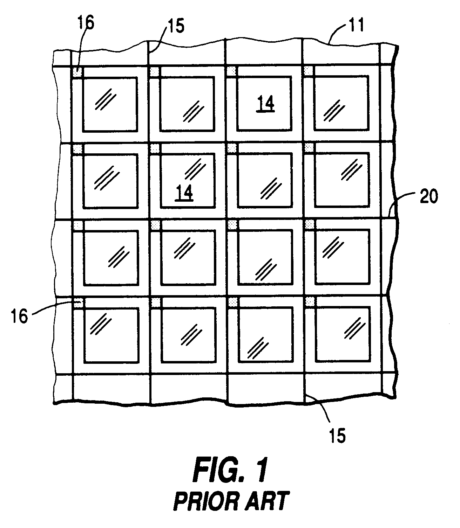

In FIGURE 1, a matrix of pixel electrodes 14 are arranged in rows ad columns on one surface of a substrate 11. Data lines 15 pass between adjacent columns, and scan lines 20 pass between adjacent rows. Solid state switching devices 16, preferably thin film transistors (TFT's), connect the pixel electrodes 14 to the data lines 15 and the scan lines 20, in known manner. One surface of a second substrate is coated with a transparent conductive material to form an electrode which is common to all of the pixels in the LCD. The first and second substrates are separated by a liquid crystal material.

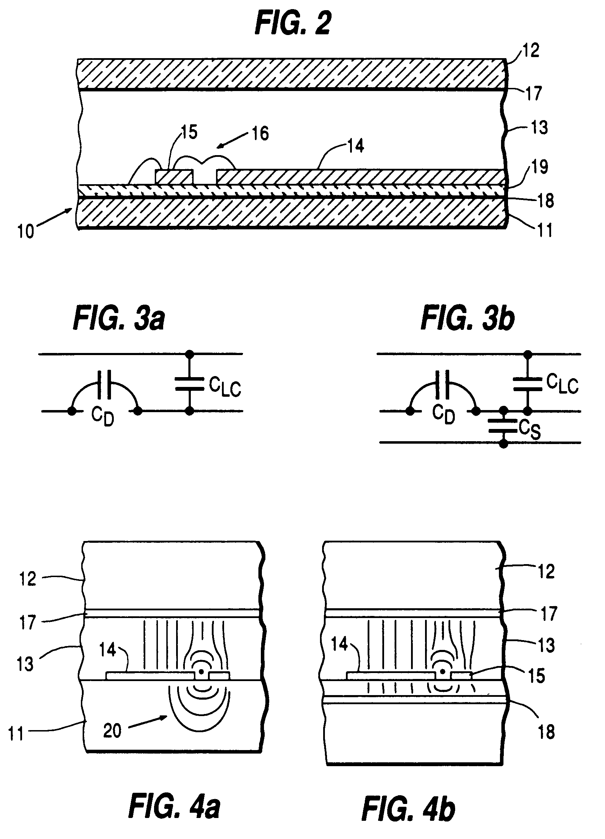

FIGURE 2 shows one pixel 10 of a liquid crystal display. Each pixel 10 is composed of two insulative substrates 11 and 12 separated by a liquid crystal material 13. The pixel 10 includes a pixel electrode 14. A data line 15 is spaced from the pixel electrode 14 and extends the full height of the matrix. A thin film transistor 16 is fabricated on an insulating layer 19 and is connected to the data line 15 and the pixel electrode 14 using known fabrication techniques. The thin film transistor serves as a switching device to apply data signals from the data line 15 to the pixel electrode 14. A transparent conductive electrode 17, typically of indium tin oxide (ITO), is arranged on the entire surface of the substrate 12 which is adjacent to the liquid crystal material 13. The electrode 17 is common to all pixels in the display device. Another transparent conductive electrode 18 is arranged on the inner surface of substrate 11 and is insulated from the data line 15 and the pixel electrode 14 by the insulating layer 19, which can be a silicon dioxide $SiO_2$ dielectric layer of, e.g., 1 micron thickness. The electrode 18 serves as a ground plane for all the pixels in the display device. The ground plane can be opaque in regions where it is desirable to block light, such as the spaces between the pixel electrodes and the data lines. In such a case, the ground plane may be a double layer of a metal and a transparent conductor. The application of the ground plane 18, the dielectric layer 19, the pixel electrodes 14, the data lines 15 and the common electrode 17 to the substrates 11 and 12 is accomplished using techniques which are standard in the solid state fabrication art.

FIGURES 3a and 3b, respectively, show the significant capacitances for liquid crystal devices without and with a ground plane. The exemplary values given below are calculated for a 500 line per inch (about 197 line per centimeter) array. In FIGURE 3a, the amount of crosstalk is determined by the crosstalk ratio $\alpha$:

$$\alpha = C_D/C_{LC} = 2.4 \text{ ff}/15 \text{ ff} = 16\%$$

where:

$C_D =$      the lateral parasitic capacitance a between a data line and a pixel electrode.

$C_{LC} =$      the liquid crystal pixel capacitance.

In FIGURE 3b, the crosstalk ratio $\alpha$ is determined by:

$$\alpha = C_D/(C_{LC} + C_S) = 0.22 \text{ ff}/(15 + 58) \text{ ff} = 0.3\%$$

where:

$C_D$ and $C_{LC}$ are defined the same as above.

$C_S =$ the ground plane 18 capacitance.

Thus, with the invention, the crosstalk ratio $\alpha$ is improved by a factor of over 50. A factor of 5 of the crosstalk decrease is a result of the additional capacitance $C_s$, which is a attribute of the buried ground plane 18. The additional factor of 10 is the result of the decrease in the capacitance $C_D$ between the data line 15 and pixel electrode 14, which also is an attribute of the buried ground plane.

The decrease in capacitance $C_D$ occasioned by the ground plane 18 can be understood from FIGURES 4a and 4b. In FIGURE 4a, no ground plane is utilized, and the capacitive coupling between the pixel electrode 14 and the data line 15 is indicated by the lines 20. In FIGURE 4b, the ground plane 18 serves as a shield to prevent the coupling, thereby producing the decrease of the capacitance $C_D$ by the factor of 10.

**Claims**

1. A liquid crystal display having a pair of insulative substrates separated by a liquid crystal material, a plurality of conductive lines supported by a first of said substrates, a matrix of pixel electrodes arranged in rows and columns and supported by said first substrate, said pixel electrodes and said conductive lines being spaced from one another, a transparent electrode supported by a second of said substrates, and a plurality of solid state switching devices for individually connecting said pixel electrodes to said conductive lines; characterized by

a conductive plane (18) arranged on the surface of said first substrate (11) which is in close proximity to said liquid crystal material (13); and

a dielectric layer (19) between said pixel electrodes (14), said conductive lines (15, 20) and said conductive plane.

2. The liquid crystal display of claim 1, characterized in that said conductive plane (18) is a transparent ground plane.

3. The liquid crystal display of claim 2, characterized in that said dielectric layer (19) is of silicon dioxide.

4. The liquid crystal display of claim 1, characterized in that said conductive lines (15, 20) extend between said columns for substantially the full length of said display.

**FIG. 1**
**PRIOR ART**

## FIG. 2

## FIG. 3a

## FIG. 3b

## FIG. 4a

## FIG. 4b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | CONFERENCE RECORD OF THE 1991 INTERNATIONAL DISPLAY RESEARCH CONFERENCE 15 October 1991, SAN DIEGO, US pages 223 - 226 J.M. VIGNOLLE ET AL. 'Optimization of Very Small Pitch Active Matrix LCD for Projection' * the whole document * | 1-4 | G02F1/136 |
| A | US-A-4 239 346 (LLOYD) * column 6, line 7 - line 41; figure 9B * | 1,4 | |
| A | PATENT ABSTRACTS OF JAPAN vol. 10, no. 160 (P-465)(2216) 7 June 1986 & JP-A-61 013 228 ( MATSUSHITA ) 21 January  1986 * abstract * | 1,2 | |
| A | PATENT ABSTRACTS OF JAPAN vol. 13, no. 297 (P-895)(3645) 10 July 1989 & JP-A-01 076 037 ( CASIO ) 22 March 1989 * abstract * | 1,2 | TECHNICAL FIELDS SEARCHED (Int. Cl.5)  G02F |

The present search report has been drawn up for all claims

| Place of search | Date of completion of the search | Examiner |
|---|---|---|
| THE HAGUE | 12 JANUARY 1993 | WONGEL H. |